(19) Europäisches Patentamt / European Patent Office / Office européen des brevets

(11) **EP 4 708 665 A1**

(12) **EUROPEAN PATENT APPLICATION**

(43) Date of publication:
**11.03.2026  Bulletin 2026/11**

(21) Application number: **24198463.2**

(22) Date of filing: **04.09.2024**

(51) International Patent Classification (IPC):
$H02P\ 3/22\ ^{(2006.01)}$    $H02P\ 27/08\ ^{(2006.01)}$
$H02P\ 21/14\ ^{(2016.01)}$   $H02P\ 29/024\ ^{(2016.01)}$
$H02P\ 29/032\ ^{(2016.01)}$  $B60L\ 3/00\ ^{(2019.01)}$
$H02P\ 101/45\ ^{(2016.01)}$

(52) Cooperative Patent Classification (CPC):
H02P 29/032; B60L 3/0023; H02P 3/22;
H02P 21/14; H02P 27/085; H02P 29/024;
H02P 2101/45

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Volvo Truck Corporation
405 08 Göteborg (SE)**

(72) Inventors:
• **JÄGERHAG, Charlie
  417 23 Göteborg (SE)**
• **HALL, Sebastian
  413 17 Göteborg (SE)**
• **OTTOSSON, Jonas
  311 79 Falkenberg (SE)**

(74) Representative: **Ström & Gulliksson AB
P.O. Box 4188
203 13 Malmö (SE)**

(54) **COMPUTER SYSTEM AND METHOD FOR SAFE STATE OPERATION OF ELECTRIC MOTOR DRIVE SYSTEMS**

(57)    A computer system is provided. The computer system comprises processing circuitry configured to: obtain a safe state request for an electric motor drive system (11) comprising an inverter (13) and an electrical machine (10) having a plurality of phases; determine, from a plurality of electrical machine parameters obtained prior to obtaining the safe state request, at least one initial phase voltage for the electrical machine (10); ramp down the magnitude from the at least one initial phase voltage while controlling the electrical machine (10); and short-circuit the electrical machine (10) through the inverter (13) when the at least one initial phase voltage has been ramped down.

FIG. 5

## Description

### TECHNICAL FIELD

The disclosure relates generally to electric motor drive systems. In particular aspects, the disclosure relates to computer systems and methods for safe state operation of electric motor drive systems. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

While electric vehicles have proven to be very reliable and robust, safety systems are common to prevent, or at least reduce the risk for, situations that may lead to component damage or dangerous driving conditions. Such safety systems may e.g. be designed for a motor drive system, which typically comprises an electrical machine and associated electronics, such as an inverter.

One example of a safety system ensures that in any severe fault situation the motor drive system will be controlled to enter a safe state, which is either Active Short Circuit (ASC) or Safe Pulse Open (SPO). At high machine speeds SPO generates a high voltage and high braking torque which is potentially dangerous. Therefore, it is better to use ASC. However, when triggering ASC a big current transient is generated from the electrical machine, which is a problem for the inverter. It can either lead to the inverter being damaged or that its internal overcurrent protection is triggered and therefore cannot maintain an ASC. If the inverter is non-operational, the safe state would transition into SPO.

In view of above, there is a need for improved safe state control of electric motor drive system.

### SUMMARY

According to a first aspect of the disclosure, a computer system is provided. The computer system comprises processing circuitry configured to: obtain a safe state request for an electric motor drive system comprising an inverter and an electrical machine having a plurality of phases; determine, from a plurality of electrical machine parameters obtained prior to obtaining the safe state request, at least one initial phase voltage for the electrical machine; ramp down the magnitude from the at least one initial phase voltage while controlling the electrical machine; and short-circuit the electrical machine through the inverter when the at least one initial phase voltage has been ramped down. The first aspect of the disclosure may seek to reduce the risk for high current transients when entering a safe state operation of the electric motor drive system. A technical benefit may include a slower and more controlled reduction of the voltage being applied to the electrical machine, which in turn reduces the risk for inverter damage or undesired triggering of overcurrent protection.

Optionally in some examples, including in at least one preferred example, the processing circuitry is further configured to ramp down the magnitude of the at least one initial phase voltage to zero before the processing circuitry is configured to short-circuit the electrical machine. A technical benefit may include a further reduction of the risk for high current transients, which in turn reduces the risk for inverter damage or undesired triggering of overcurrent protection.

Optionally in some examples, including in at least one preferred example, the processing circuitry is further configured to extrapolate the angular position of the electrical machine; determine *dq* voltages based on the extrapolated angular position of the electrical machine; apply a ramp down factor to the determined *dq* voltages, resulting in intermediate *dq* voltages; determine at least one intermediate phase voltage from the intermediate *dq* voltages; and control the electrical machine using the at least one intermediate phase voltage. A technical benefit may include a very high safety level, as new measurements of the angular position of the electrical machine are not needed.

Optionally in some examples, including in at least one preferred example, the processing circuitry is further configured to determine *dq* voltages based on an assumed constant speed of the electrical machine. A technical benefit may include activation of the safe state at a yet higher safety level, as new measurements of the speed of the electrical machine are not needed.

Optionally in some examples, including in at least one preferred example, the processing circuitry is further configured to repeatedly, during a ramp down sequence, determine at least one intermediate phase voltage from the intermediate *dq* voltages; and control the electrical machine using the at least one intermediate phase voltage. A technical benefit may include a continuous ramp down, thereby further reducing the risk for high current transients.

Optionally in some examples, including in at least one preferred example, the processing circuitry is further configured to short-circuit all phases of the electrical machine through the inverter when the at least one initial phase voltage has been ramped down. A technical benefit may include a complete safe state operation, on all phases, of the electrical machine.

Optionally in some examples, including in at least one preferred example, the processing circuitry is further configured to linearly ramp down the magnitude of the at least one initial phase voltage. A technical benefit may include a simple and continuously even ramp down of the magnitude of the at least one initial phase voltage.

Optionally in some examples, including in at least one preferred example, the processing circuitry is further configured to non-linearly ramp down the magnitude of the at least one initial phase voltage. A technical benefit may include a more sophisticated ramp down, possible allowing for fine-tuning of the ramp down speed.

Optionally in some examples, including in at least one preferred example, the processing circuitry is further configured to linearly or non-linearly ramp down the magnitude of the at least one initial phase voltage to zero before the processing circuitry is configured to short-circuit the electrical machine; extrapolate the angular position of the electrical machine; determine *dq* voltages based on the extrapolated angular position of the electrical machine, a measured DC voltage of the inverter, and on an assumed constant speed of the electrical machine; apply a ramp down factor to the determined *dq* voltages, resulting in intermediate *dq* voltages; determine at least one intermediate phase voltage from the intermediate *dq* voltages; and control the electrical machine using the at least one intermediate phase voltage; wherein the processing circuitry is further configured to: repeatedly, during a ramp down sequence, determine at least one intermediate phase voltage from the intermediate *dq* voltages; and control the electrical machine using the at least one intermediate phase voltage; wherein the processing circuitry is further configured to: short-circuit all phases of the electrical machine through the inverter when the at least one initial phase voltage has been ramped down. A technical benefit may include using a very simple approach, as the internal DC voltage of the inverter is the only parameter that needs to be measured.

According to a second aspect of the disclosure, a vehicle is provided. The vehicle comprises the computer system of the first aspect. The second aspect of the disclosure may seek to reduce the risk for high current transients when entering a safe state operation of the electric motor drive system. A technical benefit may include a slower and more controlled reduction of the voltage being applied to the electrical machine, which in turn reduces the risk for inverter damage or undesired triggering of overcurrent protection.

Optionally in some examples, including in at least one preferred example, the vehicle further comprises a motor drive system comprising an inverter and an electrical machine having a plurality of phases; and a safe state controller configured to control the inverter short circuit the electrical machine. A technical benefit may include a very simple and robust approach to safe state operation of an on-board electrical machine, requiring no external input.

According to a third aspect of the disclosure, a computer-implemented method is provided. The computer-implemented method comprises obtaining, by processing circuitry of a computer system, a safe state request for an electric motor drive system comprising an inverter and an electrical machine having a plurality of phases; determining, by the processing circuitry, from a plurality of electrical machine parameters obtained prior to obtaining the safe state request, at least one initial phase voltage for the electrical machine; ramping down, by the processing circuitry, the magnitude from the at least one initial phase voltage while controlling the electrical machine; and short-circuiting, by the processing circuitry, the electrical machine through the inverter when the at least one initial phase voltage has been ramped down. The third aspect of the disclosure may seek to reduce the risk for high current transients when entering a safe state operation of the electric motor drive system. A technical benefit may include a slower and more controlled reduction of the voltage being applied to the electrical machine, which in turn reduces the risk for inverter damage or undesired triggering of overcurrent protection..

Optionally in some examples, including in at least one preferred example, the method further comprises ramping down, by the processing circuitry, the magnitude of the at least one initial phase voltage to zero before the processing circuitry is configured to short-circuit the electrical machine. A technical benefit may include a further reduction of the risk for high current transients, which in turn reduces the risk for inverter damage or undesired triggering of overcurrent protection.

Optionally in some examples, including in at least one preferred example, the method further comprises extrapolating, by the processing circuitry, the angular position of the electrical machine; determining, by processing circuitry, *dq* voltages based on the extrapolated angular position of the electrical machine and on an assumed constant speed of the electrical machine; applying, by the processing circuitry, a ramp down factor to the determined *dq* voltages, resulting in intermediate *dq* voltages; determining, by the processing circuitry, at least one intermediate phase voltage from the intermediate *dq* voltages; and controlling, by the processing circuitry, the electrical machine using the at least one intermediate phase voltage. A technical benefit may include a very high safety level, as new measurements of the angular position of the electrical machine are not needed.

Optionally in some examples, including in at least one preferred example, the method further comprises repeatedly, during a ramp down sequence, determining, by the processing circuitry, at least one intermediate phase voltage from the intermediate *dq* voltages; and controlling, by the processing circuitry, the electrical machine using the at least one intermediate phase voltage. A technical benefit may include a continuous ramp down, thereby further reducing the risk for high current transients

Optionally in some examples, including in at least one preferred example, the method further comprises short-circuiting, by the processing circuitry, all phases of the electrical machine through the inverter when the at least one initial phase voltage has been ramped down. A technical benefit may include a complete safe state operation, on all phases, of the electrical machine.

Optionally in some examples, including in at least one preferred example, the method further comprises linearly ramping down, by the processing circuitry, the magnitude of the at least one initial phase voltage. A technical benefit may include a simple and continuously even ramp down of the magnitude of the at least one initial phase voltage.

Optionally in some examples, including in at least one preferred example, the method further comprises non-linearly ramping down, by the processing circuitry, the magnitude of the at least one initial phase voltage. A technical benefit may include a more sophisticated ramp down, possible allowing for fine-tuning of the ramp down speed.

According to a fourth aspect of the disclosure, a computer program product is provided. The computer program product comprises program code for performing, when executed by the processing circuitry, the method of the third aspect. The fourth aspect of the disclosure may seek to reduce the risk for high current transients when entering a safe state operation of the electric motor drive system. A technical benefit may include a slower and more controlled reduction of the voltage being applied to the electrical machine, which in turn reduces the risk for inverter damage or undesired triggering of overcurrent protection..

According to a fifth aspect of the disclosure, a non-transitory computer-readable storage medium is provided. The non-transitory computer-readable storage medium comprises instructions, which when executed by the processing circuitry, cause the processing circuitry to perform the method of the third aspect. The fifth aspect of the disclosure may seek to reduce the risk for high current transients when entering a safe state operation of the electric motor drive system. A technical benefit may include a slower and more controlled reduction of the voltage being applied to the electrical machine, which in turn reduces the risk for inverter damage or undesired triggering of overcurrent protection.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

FIG. 1 is an exemplary side view of a vehicle according to an example.

FIG. 2 is an exemplary system diagram of an electric motor drive system according to an example.

FIG. 3 is an exemplary system diagram of an inverter, forming part of an electric motor drive system according to an example.

FIG. 4 is an exemplary system diagram of a safe state control system according to an example.

FIG. 5 is an exemplary system diagram of a safe state control system according to an example.

FIG. 6 is another view of a safe state control system according to an example.

FIG. 7 is a series of charts illustrating a safe state operation according to a prior art example.

FIG. 8 is a series of charts illustrating a safe state operation performed by a safe state controller according to an example.

FIG. 9 is a flow chart of an exemplary method to operate an electrical machine in a safe state according to an example.

FIG. 10 is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

The examples presented herein provide a solution to the problem of ensuring a safe, robust, and reliable safe state operation of an electrical machine of an electric motor drive system. This disclosure proposes a simple and safe method of regulating the voltage out from the electric motor drive system to the high voltage system. In particular, the general idea is to reduce the current transients which may occur during a short-circuit when the voltage applied to the machine is reduced to zero in an instant. By ramping down the voltage in a controlled manner and more slowly, such as in the range of 10ms, the transient peak will be significantly suppressed. One main advantage is that ramping down the voltage can be done without requiring any new data; the control can be made using previously determined data, and by extrapolating the angular position while assuming the machine speed to be constant.

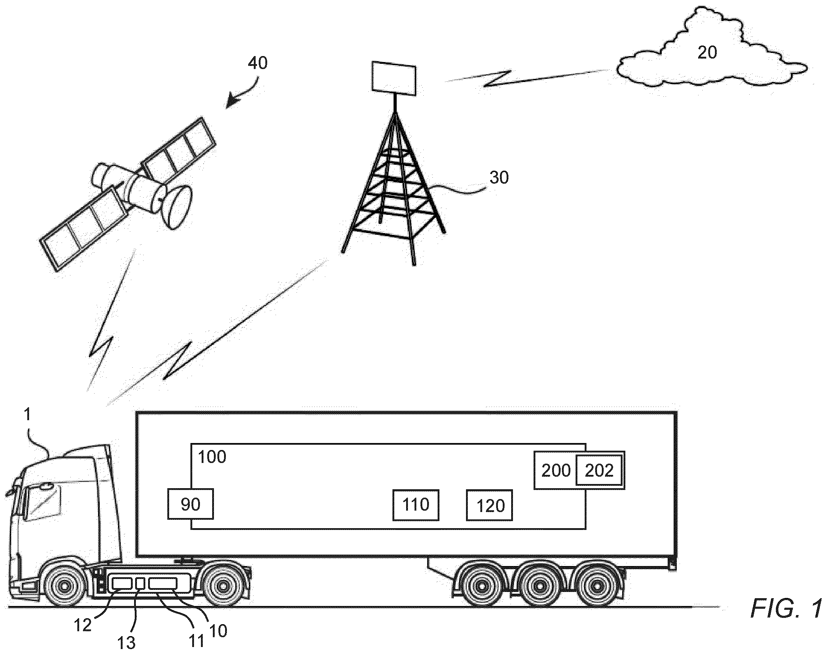

FIG. 1 is an exemplary view of a vehicle **1** according to one example. The vehicle **1** comprises at least one electrical machine **10** used to propel the vehicle **1**. The at least one electrical machine **10** forms part of an electric motor drive system **11** and may be powered by an energy storage system **12,** such as one or more batteries, configured to provide electrical energy to the one or more electrical machines **10**. The energy storage system **12** may form part of the electric motor drive system **11,** or it may be a separate component being connected to the electric motor drive system **11**.

The electric motor drive system **11** further comprises an inverter **13** being configured to provide the desired phase currents to the electrical machine **10**.

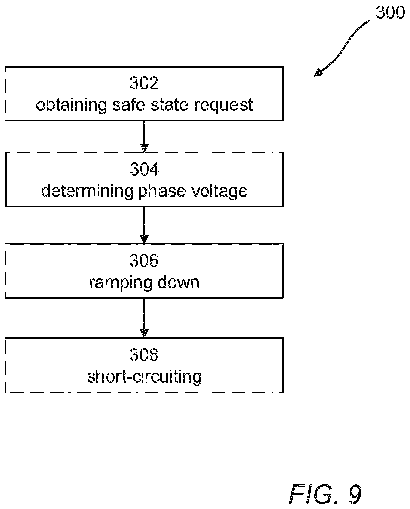

The vehicle **1** comprises, at least to some extent, processing circuitry **110** forming part of a computer system **100** (see **FIG. 9**). The processing circuitry **110** is configured to implement a safe state control system **200** which is configured to be operatively connected to the electric motor drive system **11** in order to control the electric motor drive system **11** in safe state operation.

The vehicle **1** may further comprise communications circuitry **90** configured to receive and/or send communications. The communications circuitry **90** may be configured to enable the vehicle **1** to communicate with one or more external devices or systems such as a cloud server **20**. The communication with the external devices or systems may be directly or via a communications interface such as a cellular communications interface **30**, such as a radio base station. The cloud server **20** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The communication circuitry **90** may, additionally or alternatively, be configured to enable the vehicle **1** to be operatively connected to a Global Navigation Satellite System (GNSS) **40** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle **1** may for example be configured to utilize data obtain from the GNSS **40** to determine a geographical location of the vehicle **1**.

The vehicle **1** in **FIG. 1** comprises the computer system **100** and the safe state control system **200**. The computer system **100** may be operatively connected to the safe state control system **200** and optionally to the communications circuitry **90** of the vehicle **1**. The computer system **100** comprises processing circuitry **110**. The computer system **100** may comprise a storage device **120**, advantageously a non-volatile storage device such as a hard disk drives (HDDs), solid-state drives (SSDs) etc. In some examples, the storage device **120** is operatively connected to the computer system **100**. The safe state control system **200** may comprise safe state control system processing circuitry **202**; the safe state control system processing circuitry **202** may be part of the processing circuitry **110** of the computer system **100**.

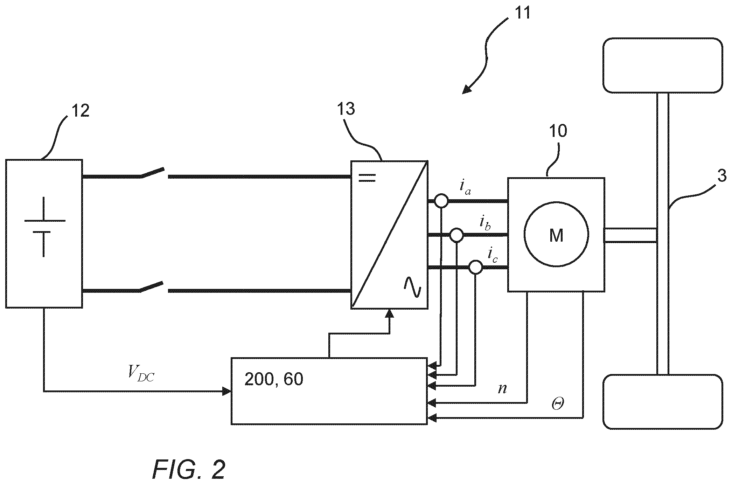

**FIG. 2** is a schematic system diagram of an electric motor drive system **11** according to an example. The electric motor drive system **11** comprises an electrical machine **10** and an inverter **13**. The electrical machine **10** is configured to provide drive torque to a drive axle **3** of an associated vehicle. The inverter **13** is powered by an energy storage system **12**, preferably being a rechargeable energy storage system **12** such as a battery. The battery **12** supplies a DC voltage $V_{DC}$ to the inverter **13**, and an motor controller **60** is configured to provide control of the inverter **13** in order to power the electrical machine **10** by suitable AC phase currents $i_a$, $i_b$, $i_c$ ($i_{abc}$). For accurate control, the motor controller **60** may receive operation parameter data, such as the DC voltage $V_{DC}$, the phase currents $i_{abc}$, the speed $n$ of the electrical machine **10**, as well as the angular position $\Theta$ of a rotor of the electrical machine **10**.

The electric motor drive system **11** further comprises a safe state control system 200. The safe state control system **200** may be implemented by the motor controller **60**, or the safe state control system **200** is a separate control system.

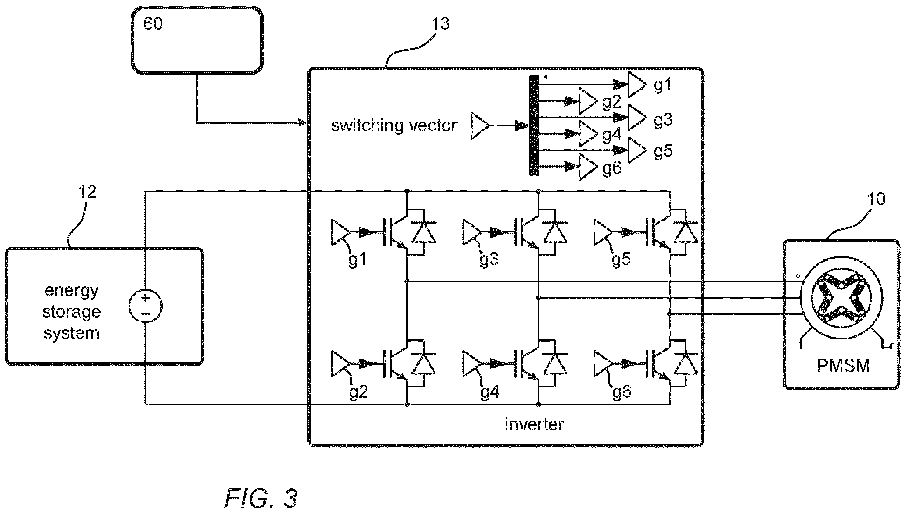

**FIG. 3** is a schematic system diagram of an inverter **13** according to an example. As described above, the inverter **13** preferably forms part of an associated electric motor drive system **11**. An associated motor controller **60** is configured to control operation of the inverter **13**, and a safe state control system **200** (optionally being implemented by the motor controller **60**) is configured to control the inverter **13** in a safe state.

In the shown example, the inverter **13** is a three-phase inverter, comprising three parallel legs of half-bridges. Each parallel leg of half-bridges comprises two switches **g1-g6**. The midpoints, commonly referred to as the AC side, are connected to the corresponding three phases of the electrical machine **10**. In the shown example, the electrical machine **10** is a permanent magnet synchronous machine. The DC side of the inverter **13** is connected to the high voltage side, i.e. the battery **12**.

In normal operation the six switches **g1-g6** are turned on and off in a way such that the AC voltage to the electrical machine **10** is controlled. The switching signals can be represented by a vector with six values representing the state, on[1] or off[0], of each of the switches **g1-g6**. With reference to the shown example, order is defined as follows [**g1, g2, g3, g4, g5, g6**].

In any severe fault the inverter **13**, being controlled by a motor controller **60**, goes to one of two possible safe states. Active Short Circuit (ASC) which means short-circuiting the electric machine **10** through the inverter **13** by setting the switching vector to [1,0,1,0,1,0] or [0,1,0,1,0,1] depending on which switches **g1-g6** to short-circuit through. In ASC the voltage out from the inverter **13** on the DC side is zero.

The other safe state is Safe Pulse Open (SPO), which means leaving all switches **g1-g6** open by setting switching vector to [0,0,0,0,0,0]. In this mode the inverter **13** is a three-phase full bridge rectifier because of the anti-parallel diodes in the half bridges. In SPO the voltage out from the inverter **13** on the DC side is the rectified back-emf of the electrical machine **10**. The back-emf of the electrical machine **10** is proportional to the speed of the electrical machine **10.**

In a complete vehicle perspective ASC is always safe. However, the challenge is for the inverter **13** to maintain the ASC, because of the high initial transient peak when ASC is triggered.

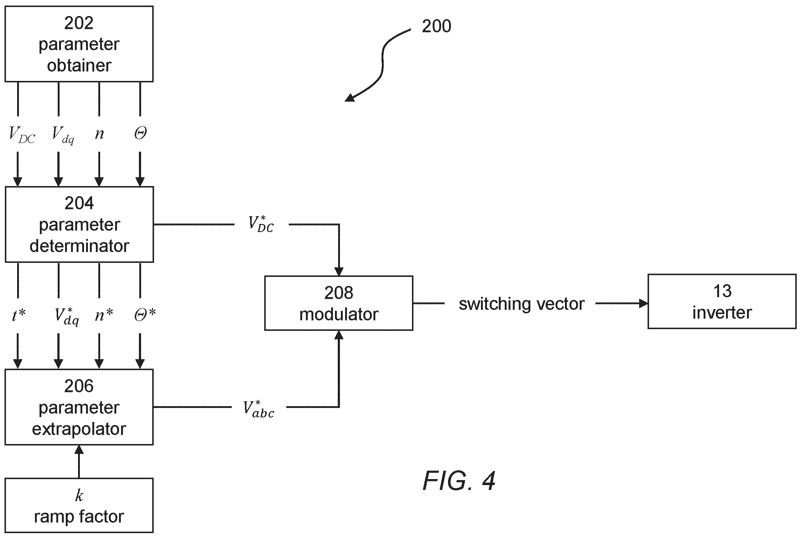

**FIG. 4** is an exemplary system diagram of a safe state control system **200** according to an example. The safe state control system **200,** being configured to determine a switching vector for the inverter **13,** comprises a parameter obtainer **202.** The parameter obtainer **202** is configured to obtain a number of parameters representing the operational state of the electrical machine **10.** Such parameters, which may be measured, may e.g. comprise the DC voltage $V_{DC}$ on the DC side of the inverter **13,** the *dq* voltages representing initial phase voltages $V_{abc}$, the speed of the electrical machine **10,** and the rotational position $\Theta$ of a rotor of the electrical machine **10.**

The safe state control system **200** further comprises a parameter determinator **204.** The parameter determinator **204** is configured to, based on the parameters obtained by the parameter obtainer **202,** determine additional parameters being used for controlling the inverter **13.** Such additional parameters may comprise an assigned DC voltage $V_{DC}^{*}$, an assigned sample time *t\*,* an assigned speed *n\** of the electrical machine **10,** an assigned angular position $\Theta^{*}$, and assigned *dq* voltages $V_{dq}^{*}$. The assigned parameters may be determined to equal the obtained parameters.

The safe state control system **200** further comprises a parameter extrapolator **206.** The parameter extrapolator **206** is configured to use the assigned parameters to extrapolate control values of the assigned parameters. For example, the assigned speed *n\**, which preferably is assumed to be constant, is used with the sample time t\* to determine an extrapolated value $\Theta^{*}$ for the angular position $\Theta$. The extrapolated value $\Theta^{*}$ is then used for extrapolating the *dq* voltages. The parameter extrapolator **206** is further configured to ramp down the magnitude of the *dq* voltages by a certain ramp factor *k,* and to determine control phase voltages $V_{abc}^{*}$ from the ramped down *dq* voltages. For example, the ramp factor *k* may be constant and set to a value such that the resulting control phase voltages $V_{abc}^{*}$ will be zero in 10 ms.

The assigned DC voltage $V_{DC}^{*}$ and the control phase voltages $V_{abc}^{*}$ are used as input data for a modulator **208,** which is configured to determine and transmit a switching vector to the inverter **13** such that the electrical machine **10** is controlled accordingly.

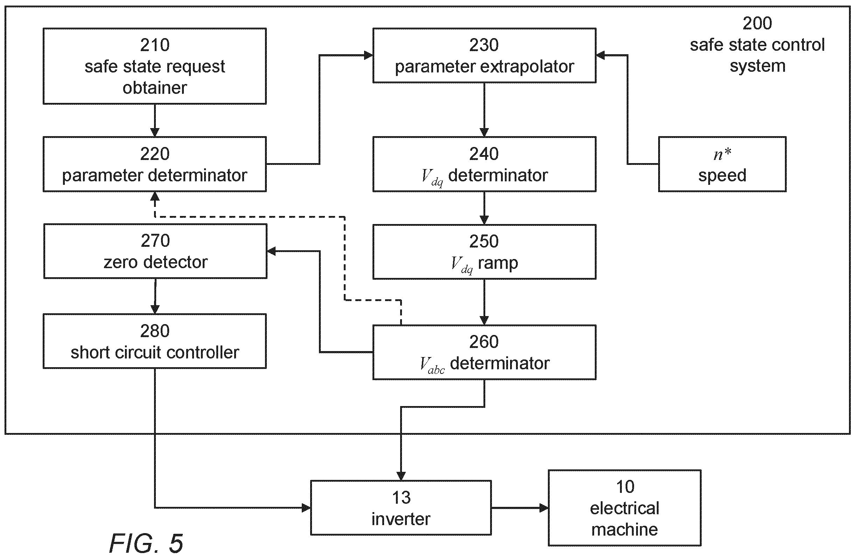

With reference to **FIG. 5** an example of a safe state control system **200** will be described. The safe state control system **200** comprises a safe state request obtainer **210.** The safe state request obtainer **210** is configured to obtain a safe state request. Typically, such safe state request is a request requiring an electrical machine **10** to be controlled in a safe state, which normally requires either active short-circuit control or safe state operation as explained above. The safe state request may be obtained from any suitable monitoring of the operation of the electrical machine **10** or its associated electric motor drive system **11.**

The safe state control system **200** further comprises a parameter determinator **220.** The parameter determinator **220** is configured to, preferably when the safe state request has been obtained, determine a plurality of operational parameters of the electrical machine **10.** As explained with reference to **FIG. 4,** such parameters may comprise the DC voltage $V_{DC}$ on the DC side of the inverter **13,** the *dq* voltages representing initial phase voltages $V_{abc}$, the speed of the electrical machine **10,** and the rotational position $\Theta$ of a rotor of the electrical machine **10.**

The safe state control system **200** further comprises a parameter extrapolator **230.** The parameter extrapolator **230** is configured to determine extrapolated values of a plurality of operational parameters. Especially, the parameter extrapolator **230** is configured to repeatedly, for a number of consecutive time samples, determine an estimated angular position $\Theta^{*}$ of a rotor of the electrical machine **10.**

The safe state control system **200** further comprises a *dq* voltage determinator **240.** The *dq* voltage determinator **240** is configured to determine *dq* voltages $V_{dq}$ based on the determined parameters, and based on the extrapolated/estimated angular position $\Theta^{*}$. Preferably, the speed *n\** of the electrical machine **10** is assumed to be constant, i.e. being equal to the speed *n* of the electrical machine **10** being determined by the parameter determinator **220.** Optionally, additional parameters may be used to determine the *dq* voltages *Vdq.*

The safe state control system **200** further comprises a voltage ramp **250.** The voltage ramp 250 is configured ramp down the voltage magnitude by applying a ramp factor *k* to the determined *dq* voltages $V_{dq}$. For example, if the modulator **208** (see **FIG. 4**) is operating at 8 kHz, and the ramping is designed to be performed during 10 ms, 80 samples will be required to go from the initial voltage down to zero. The ramp factor *k* may thus be a vector of 80 equally spaced values ranging from 1 to 0.

The safe state control system **200** further comprises a reference voltage determinator **260.** The reference voltage determinator **260** is configured to determine phase voltages $V_{abc}$ resulting from the ramped down *dq* voltages $V_{dq}$. The reference phase voltages $V_{abc}$ are used to control the inverter **13** which in turn controls the operation of the electrical machine **10** by suppling control currents for the phases of the electrical machine **10.**

The safe state control system **200** is configured to repeatedly determine reference phase voltages $V_{abc}$ during a ramp down sequence, indicated by the dashed line in **FIG. 5.** To finish the ramp down, the safe state control system **200** comprises a voltage monitor **270.** The voltage monitor **270** is configured to detect when the reference phase voltages $V_{abc}$ has reached a zero value. When the reference phase voltages $V_{abc}$, a short-circuit controller **280** is configured to active short-circuit the electrical machine **10** by transmitting a switching vector to the inverter **13.**

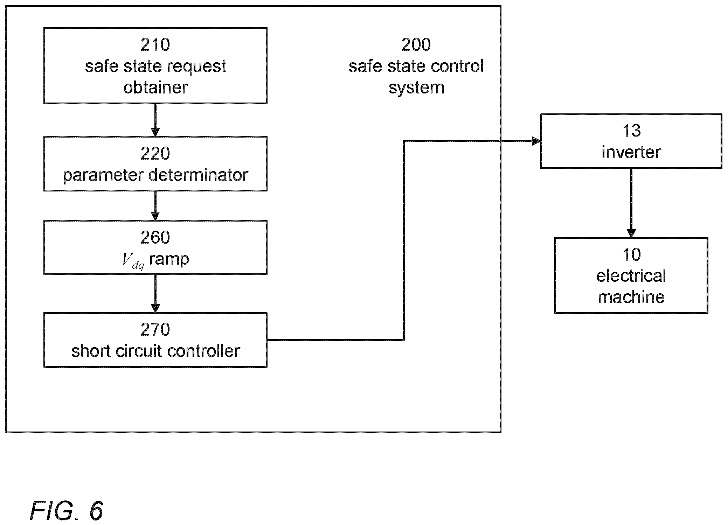

**FIG. 6** is another view of a safe state control system **200** according to an example. The safe state control system **200** comprises a safe state request obtainer **210** configured to obtain a safe state request for an electric motor drive system **11** comprising an inverter **13** and an electrical machine **10** having a plurality of phases. The safe state control system **200** further comprises a parameter determinator **220** configured to determine, from a plurality of electrical machine parameters obtained prior to obtaining the safe state request, at least one initial phase voltage for the electrical machine. The safe state control system 200 further comprises a voltage ramp **260** configured to ramp down the magnitude from the at least one initial phase voltage while controlling the electrical machine **10.** The safe state control system **200** further comprises a short-circuit controller **270** configured to short-circuit the electrical machine through the inverter when the at least one initial phase voltage has been ramped down.

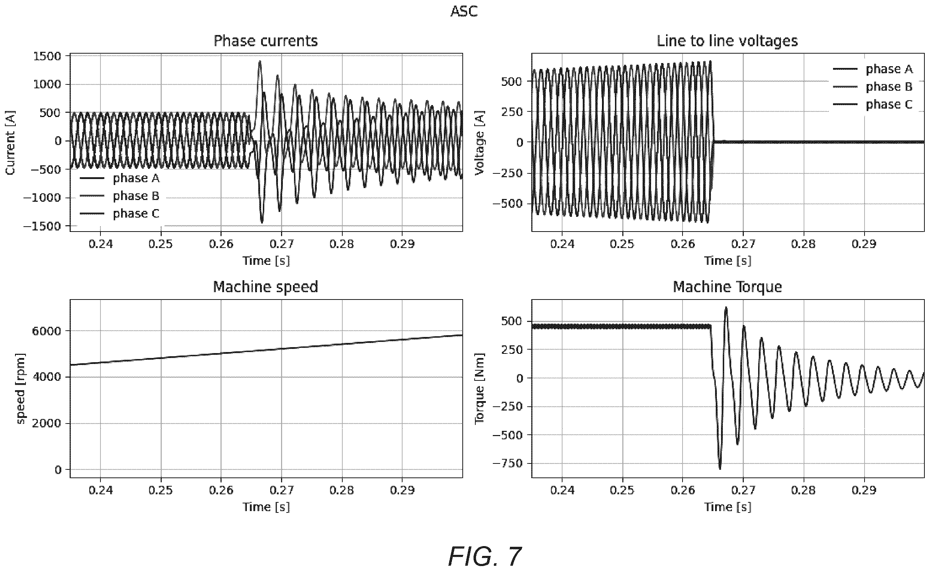

**FIG. 7** is a plurality of diagrams showing simulation results for a safe state operation where active short-circuit is immediately performed without any ramping down of the voltages. For each phase of the electrical machine **10,** the voltage is rapidly reduced to zero at the time for active short-circuiting at t = 0,265 s, as can be seen in the upper right diagram. As a result, the phase currents (shown in the upper left diagram) are creating high transients.

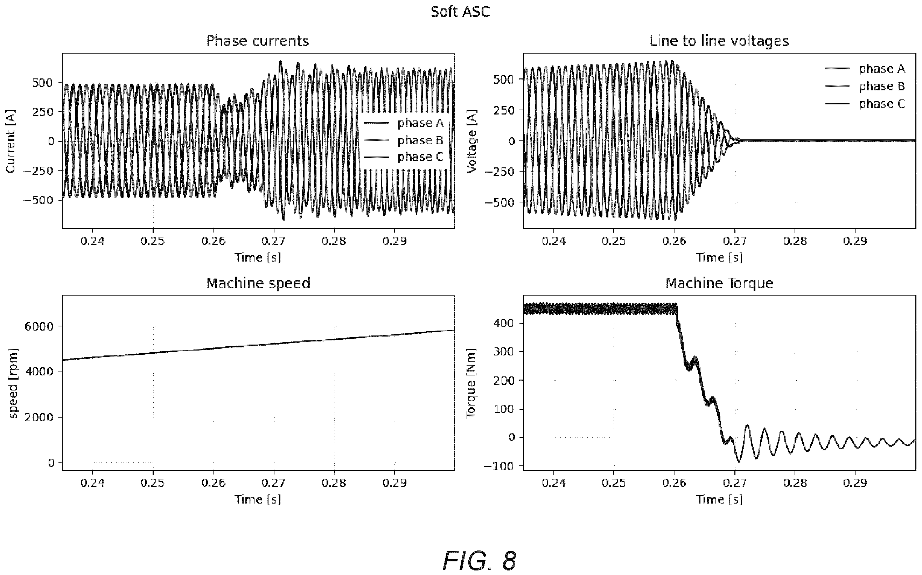

**FIG. 8** is a plurality of diagrams showing simulation results for a safe state operation where active short-circuit is performed after the voltages have been ramped down to zero. For each phase of the electrical machine **10,** the voltage is ramped down to zero at t = 0,26 s, as can be seen in the upper right diagram. The ramp down is performed for 10 ms, at which time t = 0,27 s active short-circuit is performed. As a result, the phase currents (shown in the upper left diagram) do not produce high transients thereby effectively protecting the inverter **13.**

The simulations shown in **FIG. 7** and **FIG. 8** where designed for a scenario where the pulse-width modulation control is operating at 8kHz. Signals used to control the execution were delayed by 4 switching periods in order to test robustness, and the electrical machine was operating at max torque thereby producing highest short circuit currents). The electrical machine was accelerated from 0rpm with a speed of 20000 rpm/s, and soft ASC was triggered at 5000rpm, meanwhile the electrical machine was continued to accelerate in order to test robustness.

**FIG. 9** is an exemplary flow chart of a method to control an electrical machine **10** of an electric motor drive system **11** in a safe state. The method **300** is preferably computer-implemented, comprising obtaining **302,** by processing circuitry of a computer system, a safe state request for an electric motor drive system **11** comprising an inverter **13** and an electrical machine **10** having a plurality of phases. The method **300** further comprises determining **304,** by the processing circuitry, from a plurality of electrical machine parameters obtained prior to obtaining the safe state request, at least one initial phase voltage for the electrical machine **10.** The method **300** further comprises ramping down **306,** by the processing circuitry, the magnitude from the at least one initial phase voltage while controlling the electrical machine **10.** The method **300** further comprises short-circuiting **308,** by the processing circuitry, the electrical machine **10** through the inverter **13** when the at least one initial phase voltage has been ramped down.

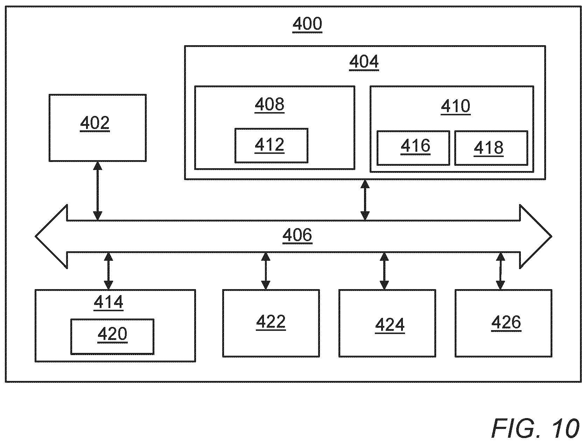

**FIG. 10** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402**. The processing circuitry **402** may include any number of hardware components for conducting data or signal processing or for executing computer code stored in memory **404**. The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402**. A basic input/output system (BIOS) **412** may be stored in the non-volatile memory **408** and can include the basic routines that help to transfer information between elements within the computer system **400**.

The computer system **400** may further include or be coupled to a non-transitory computer-readable storage medium such as the storage device **414**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410**, which may include an operating system **416** and/or one or more program modules **418**. All or a portion of the examples disclosed herein may be implemented as a computer program **420** stored on a transitory or non-transitory computer-usable or computer-readable storage medium (e.g., single medium or multiple media), such as the storage device **414**, which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402**. In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402**. The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**Example 1.** A computer system comprising processing circuitry configured to: obtain a safe state request for an electric motor drive system (11) comprising an inverter (13) and an electrical machine (10) having a plurality of phases; determine, from a plurality of electrical machine parameters obtained prior to obtaining the safe state request, at least one initial phase voltage for the electrical machine (10); ramp down the magnitude from the at least one initial phase voltage while controlling the electrical machine (10); and short-circuit the electrical machine (10) through the inverter (13) when the at least one initial phase voltage has been ramped down.

**Example 2.** The computer system of Example 1, wherein the processing circuitry is further configured to: ramp down the magnitude of the at least one initial phase voltage to zero before the processing circuitry is configured to short-circuit the electrical machine (10).

**Example 3.** The computer system of Example 1-2, wherein the processing circuitry is further configured to: extrapolate the angular position (O*) of the electrical machine (10); determine *dq* voltages based on the extrapolated angular position ($\Theta$*) of the electrical machine (10); apply a ramp down factor *(k)* to the determined *dq* voltages, resulting in intermediate *dq* voltages; determine at least one intermediate phase voltage from the intermediate *dq* voltages; and control the electrical machine (10) using the at least one intermediate phase voltage.

**Example 4.** The computer system of Example 3, wherein the processing circuitry is further configured to: determine *dq* voltages based on an assumed constant speed *(n)* of the electrical machine (10).

**Example 5.** The computer system of Example 3-4, wherein the processing circuitry is further configured to: repeatedly, during a ramp down sequence, determine at least one intermediate phase voltage from the intermediate *dq* voltages; and control the electrical machine (10) using the at least one intermediate phase voltage.

**Example 6.** The computer system of Example 1-5, wherein the processing circuitry is further configured to: short-circuit all phases of the electrical machine (10) through the inverter (13) when the at least one initial phase voltage has been ramped down.

**Example 7.** The computer system of any of Examples 1-6, wherein the processing circuitry is further configured to: linearly ramp down the magnitude of the at least one initial phase voltage.

**Example 8.** The computer system of any of Examples 1-6, wherein the processing circuitry is further configured to: non-linearly ramp down the magnitude of the at least one initial phase voltage.

**Example 9.** The computer system of Example 1, wherein the processing circuitry is further configured to: linearly or non-linearly ramp down the magnitude of the at least one initial phase voltage to zero before the processing circuitry is configured to short-circuit the electrical machine (10); extrapolate the angular position of the electrical machine (10); determine *dq* voltages based on the extrapolated angular position of the electrical machine (10), a measured DC voltage of the inverter (13), and on an assumed constant speed *(n)* of the electrical machine (10); apply a ramp down factor *(k)* to the determined *dq* voltages, resulting in intermediate *dq* voltages; determine at least one intermediate phase voltage from the intermediate *dq* voltages; and control the electrical machine (10) using the at least one intermediate phase voltage; wherein the processing circuitry is further configured to: repeatedly, during a ramp down sequence, determine at least one intermediate phase voltage from the intermediate *dq* voltages; and control the electrical machine (10) using the at least one intermediate phase voltage; wherein the processing circuitry is further configured to: short-circuit all phases of the electrical machine (10) through the inverter (13) when the at least one initial phase voltage has been ramped down.

**Example 10.** A vehicle (1) comprising the computer system of any of Examples 1-9.

**Example 11.** The vehicle of Example 10, further comprising: a motor drive system (11) comprising an inverter (13) and an electrical machine (10) having a plurality of phases; and a safe state control system (200) configured to control the inverter (13) to short circuit the electrical machine (10) when the at least one initial phase voltage has been ramped down.

**Example 12.** A computer-implemented method, comprising: obtaining, by processing circuitry of a computer system, a safe state request for an electric motor drive system comprising an inverter and an electrical machine having a plurality of phases; determining, by the processing circuitry, from a plurality of electrical machine parameters obtained prior to obtaining the safe state request, at least one initial phase voltage for the electrical machine; ramping down, by the processing circuitry, the magnitude from the at least one initial phase voltage while controlling the electrical machine; and short-circuiting, by the processing circuitry, the electrical machine through the inverter when the at least one initial phase voltage has been ramped down.

**Example 13.** The method of Example 12, further comprising: ramping down, by the processing circuitry, the magnitude of the at least one initial phase voltage to zero before the processing circuitry is configured to short-circuit the electrical machine.

**Example 14.** The method of Example 12 or 13, further comprising: extrapolating, by the processing circuitry, the angular position of the electrical machine; determining, by processing circuitry, *dq* voltages based on the extrapolated angular position of the electrical machine and on an assumed constant speed of the electrical machine; applying, by the processing circuitry, a ramp down factor to the determined *dq* voltages, resulting in intermediate *dq* voltages; determining, by the processing circuitry, at least one intermediate phase voltage from the intermediate *dq* voltages; and controlling, by the processing circuitry, the electrical machine using the at least one intermediate phase voltage.

**Example 15.** The method of any of Examples 12-14, further comprising: repeatedly, during a ramp down sequence, determining, by the processing circuitry, at least one intermediate phase voltage from the intermediate *dq* voltages; and controlling, by the processing circuitry, the electrical machine using the at least one intermediate phase voltage.

**Example 16.** The method of any of Examples 12-15, further comprising: short-circuiting, by the processing circuitry, all phases of the electrical machine through the inverter when the at least one initial phase voltage has been ramped down.

**Example 17.** The method of any of Examples 12-16, further comprising: linearly ramping down, by the processing circuitry, the magnitude of the at least one initial phase voltage.

**Example 18.** The method of any of Examples 12-16, further comprising: non-linearly ramping down, by the processing circuitry, the magnitude of the at least one initial phase voltage.

**Example 19.** A computer program product comprising program code for performing, when executed by the processing circuitry, the method of any of Examples 12-18.

**Example 20.** A non-transitory computer-readable storage medium comprising instructions, which when executed by the processing circuitry, cause the processing circuitry to perform the method of any of Examples 12-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system comprising processing circuitry configured to:

   obtain a safe state request for an electric motor drive system (11) comprising an inverter (13) and an electrical machine (10) having a plurality of phases;
   determine, from a plurality of electrical machine parameters obtained prior to obtaining the safe state request, at least one initial phase voltage for the electrical machine (10);
   ramp down the magnitude from the at least one initial phase voltage while controlling the electrical machine (10); and
   short-circuit the electrical machine (10) through the inverter (13) when the at least one initial phase voltage has been ramped down.

2. The computer system of claim 1, wherein the processing circuitry is further configured to:
   ramp down the magnitude of the at least one initial phase voltage to zero before the processing circuitry is configured to short-circuit the electrical machine (10).

3. The computer system of claim 1-2, wherein the processing circuitry is further configured to:

extrapolate the angular position (O*) of the electrical machine (10);
determine *dq* voltages based on the extrapolated angular position (O*) of the electrical machine (10);
apply a ramp down factor *(k)* to the determined *dq* voltages, resulting in intermediate *dq* voltages;
determine at least one intermediate phase voltage from the intermediate *dq* voltages; and
control the electrical machine (10) using the at least one intermediate phase voltage.

4. The computer system of claim 3, wherein the processing circuitry is further configured to:
determine *dq* voltages based on an assumed constant speed *(n)* of the electrical machine (10).

5. The computer system of claim 3-4, wherein the processing circuitry is further configured to:

repeatedly, during a ramp down sequence, determine at least one intermediate phase voltage from the intermediate *dq* voltages; and
control the electrical machine (10) using the at least one intermediate phase voltage.

6. The computer system of claim 1-5, wherein the processing circuitry is further configured to:
short-circuit all phases of the electrical machine (10) through the inverter (13) when the at least one initial phase voltage has been ramped down.

7. The computer system of any of claims 1-6, wherein the processing circuitry is further configured to:
linearly ramp down the magnitude of the at least one initial phase voltage.

8. The computer system of any of claims 1-6, wherein the processing circuitry is further configured to:
non-linearly ramp down the magnitude of the at least one initial phase voltage.

9. The computer system of claim 1, wherein the processing circuitry is further configured to:

linearly or non-linearly ramp down the magnitude of the at least one initial phase voltage to zero before the processing circuitry is configured to short-circuit the electrical machine (10);
extrapolate the angular position of the electrical machine (10);
determine *dq* voltages based on the extrapolated angular position of the electrical machine (10), a measured DC voltage of the inverter (13), and on an assumed constant speed *(n)* of the electrical machine (10);
apply a ramp down factor *(k)* to the determined *dq* voltages, resulting in intermediate *dq* voltages;
determine at least one intermediate phase voltage from the intermediate *dq* voltages; and
control the electrical machine (10) using the at least one intermediate phase voltage;
wherein the processing circuitry is further configured to:

repeatedly, during a ramp down sequence, determine at least one intermediate phase voltage from the intermediate *dq* voltages; and
control the electrical machine (10) using the at least one intermediate phase voltage;
wherein the processing circuitry is further configured to:
short-circuit all phases of the electrical machine (10) through the inverter (13) when the at least one initial phase voltage has been ramped down.

10. A vehicle (1) comprising the computer system of any of claims 1-9.

11. The vehicle of claim 10, further comprising:

a motor drive system (11) comprising an inverter (13) and an electrical machine (10) having a plurality of phases; and
a safe state control system (200) configured to control the inverter (13) to short circuit the electrical machine (10) when the at least one initial phase voltage has been ramped down.

12. A computer-implemented method, comprising:

obtaining, by processing circuitry of a computer system, a safe state request for an electric motor drive system comprising an inverter and an electrical machine having a plurality of phases;
determining, by the processing circuitry, from a plurality of electrical machine parameters obtained prior to obtaining the safe state request, at least one initial phase voltage for the electrical machine;
ramping down, by the processing circuitry, the magnitude from the at least one initial phase voltage while controlling the electrical machine; and
short-circuiting, by the processing circuitry, the electrical machine through the inverter when the at least one initial phase voltage has been ramped down.

13. The method of claim 12, further comprising:
ramping down, by the processing circuitry, the magnitude of the at least one initial phase voltage to zero before the processing circuitry is configured to short-circuit the electrical machine.

14. A computer program product comprising program code for performing, when executed by the processing circuitry, the method of any of claims 12-13.

15. A non-transitory computer-readable storage medium comprising instructions, which when executed by the processing circuitry, cause the processing circuitry to perform the method of any of claims 12-13.

FIG. 1

FIG. 2

*FIG. 3*

```
┌──────────────────┐
│       202        │
│    parameter     │
│    obtainer      │
└──────────────────┘
   │    │    │    │
  V_DC V_dq  n    Θ
   │    │    │    │
   ▼    ▼    ▼    ▼                                        200
┌──────────────────┐
│       204        │                    V*_DC
│    parameter     │────────────────────────────┐
│   determinator   │                            │
└──────────────────┘                            ▼
   │    │    │    │                   ┌──────────────────┐    switching vector    ┌──────────────┐
   t*  V*_dq n*   Θ*                  │       208        │───────────────────────▶│      13      │
   │    │    │    │                   │    modulator     │                        │   inverter   │
   ▼    ▼    ▼    ▼                   └──────────────────┘                        └──────────────┘
┌──────────────────┐                            ▲
│       206        │        V*_abc              │
│    parameter     │────────────────────────────┘
│   extrapolator   │
└──────────────────┘
          ▲
          │
┌──────────────────┐
│        k         │
│   ramp factor    │
└──────────────────┘
```

*FIG. 4*

```
┌─────────────────────────────────────────────────────────────────────────────────┐
│                                                              200                  │
│  ┌─────────────────┐           ┌─────────────────┐    safe state control         │
│  │      210        │           │      230        │        system                 │
│  │  safe state     │─────────▶ │   parameter     │◀──┐                            │
│  │  request        │           │  extrapolator   │   │                            │
│  │  obtainer       │           └────────┬────────┘   │                            │
│  └────────┬────────┘                    │            │                            │
│           │                             ▼            │                            │
│  ┌────────▼────────┐           ┌─────────────────┐   │    ┌─────────────────┐     │
│  │      220        │           │      240        │   │    │      n*         │     │
│  │   parameter     │──────────▶│  V_dq           │   └────│     speed       │     │
│  │  determinator   │           │  determinator   │        └─────────────────┘     │
│  └────────▲────────┘           └────────┬────────┘                                │
│           ┊                             ▼                                         │
│  ┌────────┊────────┐           ┌─────────────────┐                                │
│  │      270  ┊     │◀──────────│      250         │                               │
│  │  zero detector  │           │  V_dq  ramp     │                                │
│  └────────┬────────┘           └────────┬────────┘                                │
│           │                             ▼                                         │
│  ┌────────▼────────┐           ┌─────────────────┐                                │
│  │      280        │           │      260        │                                │
│  │ short circuit   │           │  V_abc          │                                │
│  │  controller     │           │  determinator   │                                │
│  └────────┬────────┘           └────────┬────────┘                                │
│           │                             │                                         │
└───────────┼─────────────────────────────┼─────────────────────────────────────────┘
            │                             ▼
            │                   ┌─────────────────┐      ┌─────────────────┐
            └──────────────────▶│      13         │─────▶│      10         │
                                │   inverter      │      │  electrical     │
                                │                 │      │   machine       │
                                └─────────────────┘      └─────────────────┘
```

*FIG. 5*

FIG. 6

FIG. 7

FIG. 8

300

```
┌─────────────────────────────┐
│           302               │
│  obtaining safe state request│
└─────────────────────────────┘
              │
              ▼
┌─────────────────────────────┐
│           304               │
│   determining phase voltage │
└─────────────────────────────┘
              │
              ▼
┌─────────────────────────────┐
│           306               │
│       ramping down          │
└─────────────────────────────┘
              │
              ▼
┌─────────────────────────────┐
│           308               │
│      short-circuiting       │
└─────────────────────────────┘
```

*FIG. 9*

*FIG. 10*

# EP 4 708 665 A1

Europäisches
Patentamt
European
Patent Office
Office européen
des brevets

## EUROPEAN SEARCH REPORT

**Application Number**

EP 24 19 8463

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/165704 A1 (MARTIN TIMOTHY JOHN [GB]) 30 May 2019 (2019-05-30) * paragraph [0013] - paragraph [0014] * * paragraph [0066] - paragraph [0103]; claims 1, 9; figures 6, 9-11 * ----- | 1-15 | INV. H02P3/22 H02P27/08 H02P21/14 H02P29/024 H02P29/032 B60L3/00 |
| X | US 2016/322927 A1 (MERKEL TINO [DE] ET AL) 3 November 2016 (2016-11-03) * paragraph [0037] - paragraph [0031]; figure 1 * * paragraph [0033] - paragraph [0053]; figures 3-6 * ----- | 1-15 | ADD. H02P101/45 |

TECHNICAL FIELDS
SEARCHED (IPC)

H02P
B60L

The present search report has been drawn up for all claims

| Place of search | Date of completion of the search | Examiner |
|---|---|---|
| Munich | 11 December 2024 | Landi, Matteo |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

23

## ANNEX TO THE EUROPEAN SEARCH REPORT
## ON EUROPEAN PATENT APPLICATION NO.

EP 24 19 8463

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2024

| Patent document cited in search report | | Publication date | Patent family member(s) | | Publication date |
|---|---|---|---|---|---|
| US 2019165704 | A1 | 30-05-2019 | CN | 107681945 A | 09-02-2018 |
| | | | EP | 3491733 A1 | 05-06-2019 |
| | | | GB | 2552663 A | 07-02-2018 |
| | | | US | 2019165704 A1 | 30-05-2019 |
| | | | WO | 2018025164 A1 | 08-02-2018 |
| US 2016322927 | A1 | 03-11-2016 | CN | 105813882 A | 27-07-2016 |
| | | | DE | 102013226564 A1 | 25-06-2015 |
| | | | EP | 3083320 A1 | 26-10-2016 |
| | | | US | 2016322927 A1 | 03-11-2016 |
| | | | WO | 2015090754 A1 | 25-06-2015 |

For more details about this annex : see Official Journal of the European Patent Office, No. 12/82